# EUROPEAN PATENT SPECIFICATION

(11) **EP 2 794 706 B1**
(45) Date of publication and mention of the grant of the patent: **17.10.2018**
(21) Application number: 12791482.8
(22) Date of filing: 27.11.2012
(51) Int. Cl.: C08G 18/10, C08G 18/12, C08G 18/36, C08G 18/38, C08G 18/44, C08G 18/48, C08G 18/66

(54) **FORMULATION SUITABLE TO PROVIDE AN ELASTOMER**
FORMULIERUNG ZUR BEREITSTELLUNG EINES ELASTOMERS
FORMULATION APPROPRIÉE POUR PRODUIRE UN ÉLASTOMÈRE

(30) Priority: 20.12.2011 EP 11194601
(43) Date of publication of application: 29.10.2014
(73) Proprietor: Huntsman International LLC, Salt Lake City, UT 84108 (US)
(72) Inventor: VAN DYCK, Johan, B-3670 Meeuwen-Gruitrode (BE); GILIS, Wim, B-3300 Tienen (BE); COCHET, Sylvie Hendrika, B-3001 Heverlee (BE)
(74) Representative: Kourgias, Catherine
(86) International application number: PCT/EP2012/073657
(87) International publication number: WO 2013/092120

(56) References cited:
- GB-A- 1 501 858
- US-A- 4 159 369
- US-A- 4 296 211
- US-A- 4 940 844

## Description

The present invention relates to formulations suitable to provide an elastomer, preferably soft elastomer, and elastomer obtained by reacting said formulations. The invention also relates to object filled with said elastomer and in particular to cavity filling.

Elastomers comprising polyurea or polyurethane have been commonly used to fill cavities of different applications such as toys, tires and the like.

However, all these polyurethanes are commonly formulated with aromatic oils as at least one of the types of plasticizers used in such an application. The use of extenders functions to both lower the cost and to soften or plasticize the polymer.

One of the common cavity fill industrial practices is to utilize petroleum based products as economical extenders, or synthesized molecules as plasticizers. Petroleum based extenders such as aromatic hydrocarbons are widely used due to their economical cost and high solubility in the urethane polymer. However, these products contain a wide variety of molecules that may be carcinogens, and/or are associated with environmental health risks creating environmental, health and safety concerns.

Extenders have also been used to impart fire retarding properties to the polymer. Common fire retardants have halogenated molecules and char forming phosphate molecules. These both add significant cost to the polymer and in some cases increase the type of toxic gases being evolved. The common industrial use of hydrocarbon extenders has made fire retarding these polymers even more difficult, due to high flammability of these extenders.

There have been some attempts to use more Environment, Health and Safety (EHS) friendly components. The use of water was screened with some success but due to property loss during wear and tear this route was not pursued for further market implementation. For instance when water was used as plasticizer, the physical properties of the obtained elastomer were poor to average and water evaporated very smoothly creating excessive shrinkage of the derived elastomer. At temperatures below 0°C the water froze rendering the elastomer hard and brittle. Document GB 1 501 858 A discloses elastomers prepared from polyethers, alkali silicate, water and PMDI (example 7) or from castor oil, alkali silicate, water and PMDI (examples 1 and 25).

There remains a need for an economical elastomer, non flammable, environmentally safer, that exhibits good tire filling properties, which would solve these current challenges.

The present inventors have now found that these objects can be obtained by using a formulation as presently claimed.

According to a first aspect of the present invention, a formulation suitable to provide an elastomer, preferably a formulation for a soft elastomer is provided. The formulation comprises:
(a) water;
(b) at least one alkali metal silicate;
(c) at least one polyol component comprising at least an aliphatic polyol containing at least one ester group and bearing at least one pendant alkyl or alkenyl group of at least four carbon atoms, each of said alkyl or alkenyl group being optionally substituted with one or more C₁₋₆ alkyl or hydroxyl substituents;
(d) at least one isocyanate selected from the group consisting of diphenylmethane diisocyanate-type isocyanates in the form of its 2,4'-, 2,2'- and 4,4'-isomers and mixtures thereof, the mixtures of diphenylmethane diisocyanates and oligomers thereof and reaction products of said polyisocyanates with components containing isocyanate-reactive hydrogen atoms; and
(e) at least one polyether polyol comprising at least one ethylene oxide unit.

According to a second aspect, the present invention also encompasses an elastomer obtained by reacting a formulation according to the first aspect of the invention.

According to a third aspect, the present invention also encompasses the use of a formulation according to the first aspect of the invention, for filling an object comprising at least one cavity.

According to a fourth aspect, the present invention also encompasses a filled object, comprising a casing which is filled with an elastomer according to the second aspect of the invention.

The present invention also encompasses a method for preparing a filled object according to the fourth aspect of the invention comprising the step of introducing a formulation according to the first aspect of the present invention into an object's casing.

The present invention is particularly useful to prepare compact elastomers with hardness levels as low as 0 Shore A. In some embodiments, despite the water content which can be as high as 40% by weight of the formulation, the cured formulation results in a quasi solid /compact elastomer with Shore A Durometer hardness ranging from 0 to 55 (DIN 53505) and/or with Asker C Durometer hardness ranging from 10 to 78 Asker C (JIS K-7312).

The elastomeric backbone can be of hybrid nature which is either interpenetrating and/or covalent bonded organic (= polyurethane (PU)) and inorganic (Si-O) polymer with in-between a jellified sodium silicate acting as softener / plasticizer. The obtained elastomer is soft and highly elastic with exceptionally good physico-mechanical and dynamical properties.

The independent and dependent claims set out particular and preferred features of the invention. Features from the dependent claims may be combined with features of the independent or other dependent claims as appropriate.

The above and other characteristics, features and advantages of the present invention will become apparent from the following detailed description, which illustrate, by way of example, the principles of the invention.

Before the present formulations of the invention are described, it is to be understood that this invention is not limited to particular formulations described, since such formulation may, of course, vary. It is also to be understood that the terminology used herein is not intended to be limiting, since the scope of the present invention will be limited only by the appended claims.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains" and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

The present invention relates to a formulation comprising:
(a) water;
(b) at least one alkali metal silicate;
(c) at least one polyol component comprising at least an aliphatic polyol containing at least one ester group and bearing at least one pendant alkyl or alkenyl group of at least four carbon atoms, each of said alkyl or alkenyl group being optionally substituted with one or more C₁₋₆ alkyl or hydroxyl substituents;
(d) at least one isocyanate selected from the group consisting of diphenylmethane diisocyanate-type isocyanates in the form of its 2,4'-, 2,2'- and 4,4'-isomers and mixtures thereof, the mixtures of diphenylmethane diisocyanates and oligomers thereof and reaction products of said polyisocyanates with components containing isocyanate-reactive hydrogen atoms, and
(e) at least one polyether polyol comprising at least one ethylene oxide unit.

The formulations are characterized in that they comprise among others water.

In some embodiment, said water is present in an amount of at least 70% by weight of the combined weight of the water and of the at least one alkali metal silicate. For example, water can be present in an amount ranging from 70% to 95% by weight, for example from 75% to 95%, for example from 80% to 95%, for example from 85 to 95% by weight based on the combined amount of components (a) + (b).

The formulations are characterized in that they comprise among others at least one alkali metal silicate.

Non-limiting examples of suitable alkali metal silicate for use in the formulation are sodium or potassium silicates, preferably sodium silicates. Any of the sodium silicates which are known to be useful in the art may be used in this invention. Preferred silicates are those wherein the weight ratio SiO₂:M₂O is in the range 2.5 to 4.0, and wherein M is sodium or potassium, preferably M is sodium. The sodium silicates may be those wherein the weight ratio of SiO₂:Na₂O is at least 1.6:1 and preferably is in the range 2:1 to 6:1, more preferably in the range 2:1 to 4:1 . Preferably the weight ratio is 3:1. Sodium silicate solutions having a weight ratio of SiO₂:Na₂O in the range 2:1 to 4:1 are available as articles of commerce. Specifically solutions wherein this ratio is 2:1, 2.5:1, 2.85:1, 3:1 and 3.3:1 are available as articles of commerce. Solutions having a weight ratio of SiO₂:Na₂O intermediates between these values may be produced by blending these commercially available materials. Non limiting examples of suitable commercially available sodium silicates are Crystal 0075, 0096, 0125, 0200, PQ Sodium Silicate, Sodium Silicate powder, Sodium silicate glass available from PQ Corporation.

In some embodiments, said alkali metal silicate and water are present in a combined amount of up to 50% by weight based on the total weight of the formulation. For example, alkali metal silicate and the water can be present in a combined amount ranging from 15% to 50% by weight, for example from 20% to 50%, for example from 25% to 50%, for example from 30% to 50% by weight based on the total weight of the formulation.

The present formulation also comprises at least one polyol component comprising at least an aliphatic polyol containing at least one ester group and bearing at least one pendant alkyl or alkenyl group of at least four carbon atoms, each of said alkyl or alkenyl group being optionally substituted with one or more C₁₋₆ alkyl or hydroxyl substituents.

These polyols can have between two and eight hydroxyl groups per molecule (on a number averaged basis), more preferably 2 to 4 hydroxyl groups, and most preferably 2 to 3. Suitable polyols contain at least one pendant alkyl or alkenyl group of 4 to 20 carbon atoms in length, and more preferably two to four pendant alkyl or alkenyl groups wherein said alkyl or alkenyl groups individually contain between 5 to 15 carbon atoms, each of said alkyl or alkenyl group being optionally substituted with one or more C₁₋₆ alkyl or hydroxyl substituents. Non-limiting examples of suitable polyols are triglycerides derived from hydroxy functional fatty acids, wherein the fatty acids individually contain between 10 and 30 carbon atoms and are free of aromatic groups. The most preferred polyols are liquids at 25 °C and have hydroxyl values of between 20 and 300 mg KOH/g (corresponding to a range of hydroxyl equivalent weights of from 2800 to 190). A still more preferred range of hydroxyl values is from 50 to 200 mg KOH/g (corresponding to a range of hydroxyl equivalent weight of from 1100 to 280). The preferred hydroxyl groups on the polyol are aliphatically bound primary and/or secondary hydroxyl groups. Individual polyols or mixtures of polyols may be used.

Preferably, said polyol component can comprise castor oil based polyol or polyols based upon the hydroxylation of a fatty acid based triglyceride, or soybean oil based polyols. Preferably, said polyol component is castor oil.

Non limiting examples of suitable polyol components are commercially available from Caldic under the designation Rhinoleic Acid; from Alberdingk Boley under the designation CO First Special Grade / No. 1, CO Low Acid 0.7; from Eagle Specialty Products (ESP) Inc. of St. Louis, MO, under the designation T31® Castor Oil; from Cognis Corporation of Cincinnati, OH, under the trademark SOVERMOL®, such as SOVERMOL® 750, SOVERMOL® 805, SOVERMOL® 1005, SOVERMOL® 1080, and SOVERMOL® 1102; from Urethane Soy Systems Company under the designation SOYOL including SOYOL R2-052-G and R2- 052-C; from the G. R. O'Shea Company under the designation POLYCIN; from BioBased Technologies, LLC under the designation Agrol 2.0 and Agrol 3.0; from Cargill under the designation BiOH 210 and 600; and from Dow such as Renave di- and trifunctional polyols . Chemical derivatives and combinations of polyols may also be employed in the formulation without departing from the scope of the present invention.

In some embodiment, said polyol component is present in an amount of up to 25% by weight based on the total weight of the formulation. For example, said polyol component can be present in an amount ranging from 10% to 25% by weight, for example from 12% to 23%, for example from 15% to 22%, for example from 15% to 20% by weight based on the total weight of the formulation.

The present formulation also comprises at
(d) at least one isocyanate selected from the group consisting of diphenylmethane diisocyanate-type isocyanates in the form of its 2,4'-, 2,2'- and 4,4'-isomers and mixtures thereof, the mixtures of diphenylmethane diisocyanates and oligomers thereof and reaction products of said polyisocyanates with components containing isocyanate-reactive hydrogen atoms; and
(e) at least one polyether comprising at least one ethylene oxide unit, and at least one isocyanate reactive group selected from the group comprising hydroxyl, amino, epoxy or thiol.

The polyisocyanates are diphenylmethane diisocyanate (MDI) - type isocyanates in the form of its 2,4'-, 2,2'- and 4,4'-isomers and mixtures thereof (also referred to as pure MDI), the mixtures of diphenylmethane diisocyanates (MDI) and oligomers thereof (known in the art as "crude" or polymeric MDI), and reaction products of polyisocyanates (e.g. polyisocyanates as set out above), with components containing isocyanate-reactive hydrogen atoms forming polymeric polyisocyanates or so-called prepolymers. Preferably, the pure MDI is used as polyisocyanate. Optionally, in some embodiments, a mixture of pure MDI and polymeric MDI is used. In some embodiments, polymeric MDI is used and can comprise a mixture of pure MDI and higher homologues of formula (I) 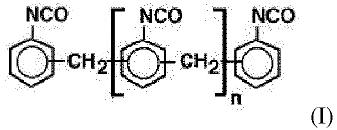 wherein n is an integer which can be from 1 to 10, preferably from 1 to 5.

In some embodiments, said at least one isocyanate and said at least one isocyanate reactive component can be formulated as a prepolymer.

The prepolymer can be generally prepared by reacting a polyisocyanate with isocyanate reactive components which are typically components containing isocyanate-reactive hydrogen atoms, such as a hydroxyl terminated polyether (polyether polyol), a hydroxyl terminated polycarbonate or mixture thereof. Optionally, the prepolymer comprises monofunctional species as emulsifying agents such as polyethylene glycol mono methyl ethers of suitable molecular weight (for example Mopeg 750 from Huntsman), and the like.

The at least one isocyanate reactive component is a polyether comprising at least one ethylene oxide unit, and at least one isocyanate reactive group selected from the group comprising hydroxyl. The at least one isocyanate reactive component is a hydroxyl containing or a hydroxyl terminated polyether also referred herein as "polyether polyol". Non-limiting examples of suitable polyether polyols are preferably polyether polyols derived from a diol or polyol having a total of from 2 to 15 carbon atoms, preferably an alkyl diol or glycol which is reacted with an ether comprising an alkylene oxide having from 2 to 6 carbon atoms, typically ethylene oxide (EO) or propylene oxide (PO) or mixtures thereof. For example, hydroxyl functional polyether can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyether polyols include poly(ethylene glycol) comprising ethylene oxide reacted with ethylene glycol, poly(propylene glycol) comprising propylene oxide reacted with propylene glycol, poly(tetramethyl glycol) (PTMG) comprising water reacted with tetrahydrofuran (THF). Polyether polyols can further include polyamide adducts of an alkylene oxide and can include, for example, ethylenediamine adduct comprising the reaction product of ethylenediamine and propylene oxide, diethylenetriamine adduct comprising the reaction product of diethylenetriamine with propylene oxide, and similar polyamide type polyether polyols. Copolyethers can also be utilized in the current invention. Typical copolyethers include the reaction product of glycerol and ethylene oxide or glycerol and propylene oxide. The various polyether intermediates generally have a number average molecular weight (Mn), as determined by assay of the terminal functional groups which is an average molecular weight, of from about 500 to about 10000, desirably from about 500 to about 5000, and preferably from about 700 to about 3000.

According to particular embodiments, the polyether polyols are EO-tipped polyether polyols. Suitable EO-tipped polyether polyol comprises polyether polyol having a structure I-[R-(CH₂CH₂O)ₚH]ₓ, wherein x is an integer equal to or more than 1, p is a number varying from 1 to 100, I is an initiator and R represents a series of epoxides, the (CH₂CH₂O)ₚH groups being bound to R via an ether bond. The initiator I may be an alcohol, an amine, a polyalcohol, a polyamine or a component comprising one or more alcohol groups and one of more amine groups. The EO content of the EO-tipped polyether polyol may range from 0% to 50% by weight for example from 15 to 20 % by weight. The % by weight refers to the weight of the EO-units over the total weight of the EO-tipped polyether polyol.

The prepolymer is generally made from the abovementioned isocyanate reactive component such as a hydroxyl terminated polyether, or polycarbonate, preferably polyether, which is further reacted with a polyisocyanate, preferably a diisocyanate.

Preferably, the prepolymer comprises at least one isocyanate and at least one polyether polyol. These prepolymers can be prepared by conventional methods, e. g. by reacting polyether polyol which have a molecular weight of from 400 to 10000, preferably 1000 to 7000, most preferably around 6000, in particular mono-or polyhydroxyl polyethers, with excess quantities of polyisocyanates, for example aliphatic, cycloaliphatic, araliphatic, aromatic or heterocyclic polyisocyanates. Given as examples of the polyether polyols are polyethylene glycol, polypropylene glycol, polypropylene glycol-ethylene glycol copolymer, polytetramethylene glycol, polyhexamethylene glycol, polyheptamethylene glycol, polydecamethylene glycol, and polyether polyols obtained by ring-opening copolymerization of alkylene oxides, such as ethylene oxide and/or propylene oxide, with isocyanate-reactive initiators of functionality 2 to 8.

In some embodiments, said prepolymer used in the formulation has an isocyanate content of 1 to 30 % by weight based on the total weight of the prepolymer, preferably 2 to 28 % by weight based on the total weight of the prepolymer.

In some embodiments, said prepolymer is present in an amount up to 50% by weight based on the total weight of the formulation. For example, the prepolymer can be present in an amount ranging from 10% to 50% by weight, for example from 15% to 50%, for example from 15% to 40%, preferably from 15% to 30% by weight based on the total weight of the formulation.

The formulations can also contain other additives such as plasticizers, acidifying agents, thickening agents, fillers, silicas, molecular sieves, regulators, accelerators, and/or other conventional additives such as pigments, thixotropic agents, and similar materials known in the art. Suitable plasticizers comprise Mesamoll (Bayer AG; a plasticizer comprising the alkylsulfonic acid esters of phenol), linseed oil (Unimol®, Bayer AG; a group of plasticizers comprising phthalic acid esters), Santicizer® (Monsanto; a plasticizer on the basis of octyldiphenyl phosphate, isodecylbenzylbutyl phthalate, polyadipates, etc.), and similar materials. Conventional filler substances can be used as the fillers. Non-limiting examples thereof include calcium oxide, barium sulfate, zinc stearate, calcium carbonate, aluminum hydroxide, fly ash, alumino silicates such as Fillite 106, Fillite 160, Fillite 52/7S and Fillite SG (Trelleborg Fillite, Inc), PIR powder, Melpapure MC50, Syloviv A3 (Grace Davison), fumed silica, chalk and/or baryta. Suitable thickening agent are available from Rockwood additives under the designation Laponite 9. Preferably the formulation comprises at least one plasticizer selected from the group comprising Mesamoll and linseed oil, or mixture thereof. Suitable linseed oils are available from Alberdingk Boley under the designation Crude LO and Refined LO; or from Mosselmann under the designation Crude Lineseedoil and Refined Lineseedoil. For example, the additives can be present in an amount ranging from 0% to 50% by weight, for example from 0% to 40%, for example from 0% to 30%, for example from 0% to 20%, for example from 0% to 10% by weight based on the total weight of the formulation.

In some embodiment, the formulation is formulated as a two components formulation, wherein the first component comprises the water; said at least one alkali metal silicate; and said at least one polyol component comprising at least an aliphatic polyol containing at least one ester group and bearing at least one pendant alkyl or alkenyl group of at least four carbon atoms; and the second component comprises said at least one isocyanate; and said at least one isocyanate reactive component selected from the group comprising polyether, polycarbonate and/or mixture thereof, wherein each of said polyether or polycarbonate compound comprises at least one isocyanate reactive group selected from the group comprising hydroxyl, amino, epoxy or thiol.

The present invention also encompasses an elastomer obtained by reacting a formulation according to the first aspect of the invention. The elastomers can have a Shore A hardness ranging from 0 to 55 as measured according to DIN 53505. Preferably the elastomers can have an ASKER-C hardness of from 10 to 78 as measured according to JIS K-7312.

The present invention also encompasses the use of a formulation according to the invention for filling an object comprising at least one cavity. The object can be tires, toys, etc... Preferably, the formulation can be used to fill pneumatic tires. The invention is applicable to filling a wide range of tires that can be used in many applications, in particular low speed vehicle.

The present invention also encompasses a filled object, comprising a casing with is filled with an elastomer according to the invention. Preferably the filled object is a filled tire. The tires can be, for example, for a bicycle, a pram, a cart such as a golf cart or shopping cart, a motorized or unmotorized wheelchair, as well as various types of agriculture, industrial and construction equipment. Preferably, the elastomer filling said object is formed by curing within the casing a formulation according to the first aspect of the invention.

The elastomers produced have the advantage of having high elasticity and of being strong. The elastomers have low flammability. In addition, the elastomer is self healing due to skin densification and further water release is consequently minimized.

The formulations of these elastomers have also the advantage of being based on mainly green and renewable resourced raw materials which are sustainable.

The invention is illustrated but not limited by the following examples.

### EXAMPLE

Elastomers according to embodiments of the invention were prepared. In this example the following ingredients were used:
Suprasec 4106: Prepolymer having an isocyanate (NCO) value of 13.65 % and EO-content of 7.84 % , based on a MDI mixture and a polyether polyol, available from Huntsman Polyurethanes.
Suprasec 4107: Prepolymer of NCO value 10.92% and EO-content 8.96% available from Huntsman Polyurethanes.
Sodium silicate solution having a ratio SiO₂:Na₂O in the range 3.17 to 3.45 (average about 3.3); a composition of 27.1-28.1 wt % of SiO₂, 8.4-8.8 wt % Na₂O, with the balance being water; and a density of about 39.5 Baume (°Be) and a specific gravity of 1.375, 60 to 80% water, and solid content 20 to 40% obtained from Crossfield Ltd of Warrington, U.K.
Castor oil: OH value 160 - 168 mg KOH/g with specific gravity of 0.95 - 0.96 g/cm³ at 25°C, available from Caldic.

### Elastomer 1:

A polyol containing resin (polyol resin) was prepared in advance by mixing with a dynamic mixer water, sodium silicate solution and castor oil (as the polyol) in a ratio of about 40/40/20. The Suprasec 4106 prepolymer with NCO 13.65% and EO 7.84 % was pre-weighed (100 / 18.82) and the prepared polyol resin was dosed onto the prepolymer and mixed at 5000 rpm.

Freshly mixed components were perfectly liquid and easy pourable (Viscosity of about 2000-2500 cps). The open time of the system was 24'. During the open time, the mixture was poured into closed cavity and allowed for curing.

After curing the elastomer was kept inside the closed cavity in order to keep the water inside and maintain elasticity and softness of the elastomer as well as its dimensions. At room temperature no water evaporation was observed. At temperatures below 0°C the elastomer was hardening like any other PU elastomer but remaining elastic .

### Elastomer 2:

A polyol containing resin was prepared in advance by mixing with a dynamic mixer: water, Crystal 75 and castor oil in a ratio of about 40/40/20. Suprasec 4107 prepolymer with NCO 10.92% and EO 8.96 % was pre-weighed (100 / 28.55) and the prepared polyol resin was dosed onto the prepolymer and mixed at 5000 rpm.

Freshly mixed components were perfectly liquid and easy pourable (Viscosity of about 2000-2500 cps). The open time of the system was 6 minutes. During the open time, the mixture was poured into an open cavity and allowed for curing.

After curing the elastomer was kept inside the cavity in order to keep the water inside and maintain elasticity and softness of the elastomer as well as its dimensions. At room temperature no water evaporation was observed. At temperatures below 0°C the elastomer was hardening like any other PU elastomer but remaining elastic.

While the elastomer was drying at skin surface a kind of densification was observed which advantageously additionally slows down water evaporation as a function of time. This is particularly advantageous when the elastomer is used to fill a cavity and the casing is destroyed or punctured; due to densifications effects the elastomer of the invention will preserve its good tear properties, even in wet conditions.

After curing the elastomer was kept inside the closed cavity in order to keep the water inside and maintain elasticity and softness of the elastomer as well as its dimensions. At room temperature no water evaporation was observed. At temperatures below 0°C the elastomer was hardening like any other PU elastomer but remaining elastic .

### Elastomer 2:

A polyol containing resin was prepared in advance by mixing with a dynamic mixer: water, Crystal 75 and castor oil in a ratio of about 40/40/20. Suprasec 4107 prepolymer with NCO 10.92% and EO 8.96 % was pre-weighed (100 / 28.55) and the prepared polyol resin was dosed onto the prepolymer and mixed at 5000 rpm.

Freshly mixed components were perfectly liquid and easy pourable (Viscosity of about 2000-2500 cps). The open time of the system was 6 minutes. During the open time, the mixture was poured into an open cavity and allowed for curing.

After curing the elastomer was kept inside the cavity in order to keep the water inside and maintain elasticity and softness of the elastomer as well as its dimensions. At room temperature no water evaporation was observed. At temperatures below 0°C the elastomer was hardening like any other PU elastomer but remaining elastic.

While the elastomer was drying at skin surface a kind of densification was observed which advantageously additionally slows down water evaporation as a function of time. This is particularly advantageous when the elastomer is used to fill a cavity and the casing is destroyed or punctured; due to densifications effects the elastomer of the invention will preserve its good tear properties, even in wet conditions.

## Claims

1. A formulation suitable to provide an elastomer, said formulation comprising
(a) water;
(b) at least one alkali metal silicate;
(c) at least one polyol component comprising at least an aliphatic polyol containing at least one ester group and bearing at least one pendant alkyl or alkenyl group of at least four carbon atoms, each of said alkyl or alkenyl group being optionally substituted with one or more C1-6 alkyl or hydroxyl substituents;
(d) at least one isocyanate selected from the group consisting of diphenylmethane diisocyanate - type isocyanates in the form of its 2,4'-, 2,2'- and 4,4'-isomers and mixtures thereof, the mixtures of diphenylmethane diisocyanates and oligomers thereof and reaction products of said polyisocyanates with components containing isocyanate-reactive hydrogen atoms; and
(e) at least one polyether polyol comprising at least one ethylene oxide unit.

2. The formulation according to claim 1, wherein the alkali metal silicate is a sodium silicate wherein the weight ratio SiO₂: Na₂O is in the range 2:1 to 6:1, preferably in the range 2:1 to 4:1, more preferably the weight ratio is 3:1.

3. The formulation according to any one of claims 1 or 2, wherein said water and alkali metal silicate are present in a combined amount of up to 50% by weight based on the total weight of the formulation.

4. The formulation according to any one of claims 1 to 3, wherein said water is present in an amount of at least 70% by weight based on the combined weight of the water and the at least one alkali metal silicate

5. The formulation according to any one of claims 1 to 4, wherein said polyol component is present in an amount of up to 25% by weight based on the total weight of the formulation.

6. The formulation according to any one of claims 1 to 5, wherein said polyol component comprises castor oil based polyol, or polyols based upon the hydroxylation of a fatty acid based triglyceride.

7. The formulation according to any one of claims 1 to 6, wherein said at least one isocyanate and said at least one polyether polyol are formulated as a prepolymer.

8. The formulation according to claim 7, wherein said prepolymer is present in an amount up to 50% by weight based on the total weight of the formulation.

9. The formulation according to claim 7 or 8, wherein said prepolymer has an isocyanate content of 1 to 30 wt% by weight based on the total weight of the prepolymer.

10. An elastomer obtained by reacting a formulation according to any one of claims 1 to 9.

11. The elastomer according to claim 10, having a Shore A hardness of 0 to 55 (DIN 53505).

12. Use of a formulation according to any of claims 1 to 9, for filling an object comprising at least one cavity.

13. A filled object, comprising a casing with is filled with an elastomer according to claim 10 or 11.

14. The filled object according to claim 13, wherein said filled object is a filled tire.

15. The filled object according to claim 13 or 14, wherein the elastomer is formed by curing within the casing a formulation according to any one of claims 1 to 9.

## Patentansprüche

1. Formulierung, die zur Bereitstellung eines Elastomers geeignet ist, wobei die Formulierung umfasst
(a) Wasser;
(b) mindestens ein Alkalimetallsilikat;
(c) mindestens eine Polyolkomponente, umfassend mindestens ein aliphatisches Polyol, das mindestens eine Estergruppe enthält und mindestens eine seitenständige Alkyl- oder Alkenylgruppe mit mindestens vier Kohlenstoffatomen trägt, wobei jede der Alkyl- oder Alkenylgruppe gegebenenfalls mit einem oder mehreren C1-6-Alkyl- oder Hydroxylsubstituenten substituiert ist;
(d) mindestens ein Isocyanat, ausgewählt aus der Gruppe bestehend aus Isocyanaten vom Diphenylmethandiisocyanattyp in Form seiner 2,4'-, 2,2'- und 4,4'-Isomeren und Mischungen davon, den Mischungen von Diphenylmethandiisocyanaten und Oligomeren davon und Reaktionsprodukten dieser Polyisocyanate mit Komponenten, die isocyanatreaktive Wasserstoffatome enthalten; und
(e) mindestens ein Polyetherpolyol, das mindestens eine Ethylenoxideinheit umfasst.

2. Formulierung nach Anspruch 1, wobei das Alkalimetallsilikat ein Natriumsilikat ist, wobei das Gewichtsverhältnis SiO₂:Na₂O im Bereich von 2:1 bis 6:1, bevorzugt im Bereich von 2:1 bis 4:1, liegt, wobei das Gewichtsverhältnis bevorzugter 3:1 ist.

3. Formulierung nach irgendeinem der Ansprüche 1 oder 2, wobei das Wasser und das Alkalimetallsilikat in einer kombinierten Menge von bis zu 50 Gewichts-%, bezogen auf das Gesamtgewicht der Formulierung, vorliegen.

4. Formulierung nach irgendeinem der Ansprüche 1 bis 3, wobei das Wasser in einer Menge von mindestens 70 Gewichts-%, bezogen auf das kombinierte Gewicht des Wassers und des mindestens einen Alkalimetallsilikats, vorliegt.

5. Formulierung nach irgendeinem der Ansprüche 1 bis 4, wobei die Polyolkomponente in einer Menge von bis zu 25 Gewichts-%, bezogen auf das Gesamtgewicht der Formulierung, vorliegt.

6. Formulierung nach irgendeinem der Ansprüche 1 bis 5, wobei die Polyolkomponente auf Rizinusöl basierendes Polyol oder Polyole, die auf der Hydroxylierung eines Triglycerids auf Fettsäurebasis basieren, umfasst.

7. Formulierung nach irgendeinem der Ansprüche 1 bis 6, wobei das mindestens eine Isocyanat und das mindestens eine Polyetherpolyol als ein Präpolymer formuliert sind.

8. Formulierung nach Anspruch 7, wobei das Präpolymer in einer Menge von bis zu 50 Gewichts-%, bezogen auf das Gesamtgewicht der Formulierung, vorliegt.

9. Formulierung nach Anspruch 7 oder 8, wobei das Präpolymer einen Isocyanatgehalt von 1 bis 30 Gewichts-%, bezogen auf das Gesamtgewicht des Präpolymers, aufweist.

10. Elastomer, erhalten durch Umsetzen einer Formulierung nach irgendeinem der Ansprüche 1 bis 9.

11. Elastomer nach Anspruch 10 mit einer Shore A-Härte von 0 bis 55 (DIN 53505).

12. Verwendung einer Formulierung nach irgendeinem der Ansprüche 1 bis 9 zum Füllen eines Gegenstandes, der mindestens einen Hohlraum umfasst.

13. Gefüllter Gegenstand, umfassend eine Ummantelung, die mit einem Elastomer nach Anspruch 10 oder 11 gefüllt ist.

14. Gefüllter Gegenstand nach Anspruch 13, wobei der gefüllte Gegenstand ein gefüllter Reifen ist.

15. Gefüllter Gegenstand nach Anspruch 13 oder 14, wobei das Elastomer durch Härten einer Formulierung nach irgendeinem der Ansprüche 1 bis 9 innerhalb der Ummantelung gebildet wird.

## Revendications

1. Formulation appropriée pour fournir un élastomère, ladite formulation comprenant :
(a) de l'eau ;
(b) au moins un silicate de métal alcalin ;
(c) au moins un composant polyol comprenant au moins un polyol aliphatique contenant au moins un groupe ester et portant au moins un groupe alkyle ou alcényle pendant d'au moins quatre atomes de carbone, chacun desdits groupes alkyle ou alcényle étant éventuellement substitué avec un ou plusieurs substituants alkyle en C1 à C6 ou hydroxyle ;
(d) au moins un isocyanate choisi dans le groupe constitué par les isocyanates du type diphénylméthane-diisocyanate sous la forme de leurs isomères 2,4'-, 2,2'- et 4,4'- et leurs mélanges, les mélanges de diphényl-méthane-diisocyanates et de leurs oligomères et des produits de réaction desdits polyisocyanates avec des composants contenant des atomes d'hydrogène réactifs aux isocyanates ; et
(e) au moins un polyétherpolyol comprenant au moins un motif oxyde d'éthylène.

2. Formulation selon la revendication 1, dans laquelle le silicate de métal alcalin est un silicate de sodium où le rapport en poids de SiO₂:Na₂O se situe dans la plage de 2:1 à 6:1, de préférence dans la plage de 2:1 à 4:1, davantage de préférence le rapport en poids est de 3:1.

3. Formulation selon l'une quelconque de la revendication 1 ou 2, dans laquelle lesdits eau et silicate de métal alcalin sont présents en une quantité combinée de jusqu'à 50 % en poids sur la base du poids total de la formulation.

4. Formulation selon l'une quelconque des revendications 1 à 3, dans laquelle ladite eau est présente en une quantité d'au moins 70 % en poids sur la base du poids combiné de l'eau et de l'au moins un silicate de métal alcalin.

5. Formulation selon l'une quelconque des revendications 1 à 4, dans laquelle ledit composant polyol est présent en une quantité de jusqu'à 25 % en poids sur la base du poids total de la formulation.

6. Formulation selon l'une quelconque des revendications 1 à 5, dans laquelle ledit composant polyol comprend un polyol à base d'huile de ricin, ou des polyols basés sur l'hydroxylation d'un triglycéride à base d'acide gras.

7. Formulation selon l'une quelconque des revendications 1 à 6, dans laquelle ledit au moins un isocyanate et ledit au moins un polyétherpolyol sont formulés sous forme de prépolymère.

8. Formulation selon la revendication 7, dans laquelle ledit prépolymère est présent en une quantité de jusqu'à 50 % en poids sur la base du poids total de la formulation.

9. Formulation selon la revendication 7 ou 8, dans laquelle ledit prépolymère a une teneur en isocyanate de 1 à 30 % en poids sur la base du poids total du prépolymère.

10. Elastomère obtenu en faisant réagir une formulation selon l'une quelconque des revendications 1 à 9.

11. Elastomère selon la revendication 10, ayant une dureté Shore A de 0 à 55 (DIN 53505).

12. Utilisation d'une formulation selon l'une quelconque des revendications 1 à 9, pour remplir un objet comprenant au moins une cavité.

13. Objet rempli, comprenant une carcasse qui est remplie avec un élastomère selon la revendication 10 ou 11.

14. Objet rempli selon la revendication 13, ledit objet rempli étant un pneu rempli.

15. Objet rempli selon la revendication 13 ou 14, dans lequel l'élastomère est formé par durcissement dans la carcasse d'une formulation selon l'une quelconque des revendications 1 à 9.
